# EUROPEAN PATENT APPLICATION

(11) **EP 1 619 290 A1**
(43) Date of publication of application: **25.01.2006**
(21) Application number: 05106626.4
(22) Date of filing: 20.07.2005
(51) Int. Cl.: D06F 58/02, D06F 58/20

(54) **Laundry washing and/or drying machine with insulated heating duct**

(30) Priority: 20.07.2004 KR 2004056274
(71) Applicant: SAMSUNG ELECTRONICS CO., LTD., Suwon-si, Gyeonggi-do (KR)
(72) Inventor: Kim, Hyung-gyoon, Suwon-si Gyeonggi-do (KR); Pyo, Sang-yeon, Suwon-si Gyeonggi-do (KR); Park, Jae-ryong, Yeongtong-gu Suwon-si Gyeonggi-do (KR); Cho, Hwang-mook Samsong Electronics Dormitory, Suwon-si Gyeonggi-do (KR); Yang, Byoung-yull, Ansan-si Gyeonggi-do (KR)
(74) Representative: Grey, Ian Michael

(57) **Abstract**

A drum washing machine includes a drum (20), a drying duct communicating with the drum, a fan (70) for introducing air into the drying duct (80), and a heater (60) provided in the drying duct (80) and for heating the air from the fan. The drying duct is insulated so as to prevent heat generated by the heater (60) from being radiated outward. Thus, the drum washing machine prevents heat generated by the heater from being radiated from the drying duct, thereby reducing heat-loss. The drying duct (80) may comprise an outer duct (82) and an inner duct (84) provided inside the outer duct (82), with a heat insulating part (86) between the inner and outer duct.

## Description

The present invention relates to a washing and/or drying machine comprising a drum, a drying duct in communication with the drum for the circulation of air therethrough and, a heater disposed in the drying duct to heat the air supplied to the drum.

Many known washing machines are capable of performing drying operations in addition to washing, rinsing and draining operations.

A drying operation of a washing machine can be classified into a "circulation"-type drying operation in which air is discharged from within the drum and recirculated back into the drum and a "non-circulation"-type drying operation in which external air from outside the washing machine is supplied into the drum to dry the clothes.

A conventional washing machine comprises a drum accommodating clothes, a drying duct in communication with the drum, a fan for drawing air into the drying duct and a heater provided inside the drying duct to heat the air as it is drawn therethrough. In operation of such washing machines, the air is heated by the heater to a high temperature and is supplied into the drum to dry the clothes. Such known prior art washing machines are disclosed in Korean Patent Application Nos. 10-2002-0001733 and 10-2002-0052977.

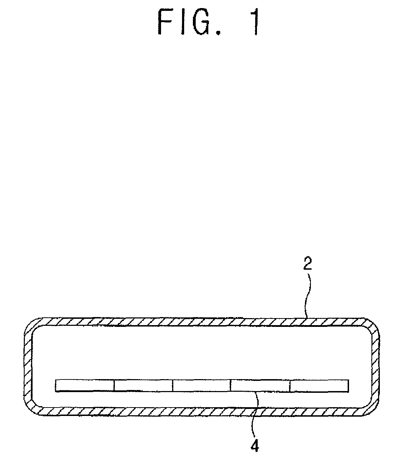

Referring to Figure 1, a drying duct 2 of a conventional washing and drying machine comprises aluminium material with good heat-resistance to protect a surface thereof from a high temperature heater 4. However, the heat generated from the heater 4 is likely to radiate from the drying duct 2, thereby causing heat loss. This reduces the heating efficiency of the drum washing machine and so increases its power consumption.

The object of the present invention is to provide a washing and/or drying machine that substantially alleviates or overcomes the problems mentioned above.

Accordingly, the washing and/or drying machine of the present invention is characterised in that the drying duct is insulated to minimise heat loss through the duct.

In a preferred embodiment, the drying duct comprises a plurality of layers, and the layers preferably comprise an inner duct and an outer duct, the heater being disposed within said inner duct.

Preferably, a space between the inner and outer duct is filled with air, and the air-filled space between the inner and outer duct is advantageously sealed. Alternatively, a space between the inner and outer duct may contain an insulating material. Said insulting material may entirely fill the space between the inner and outer ducts, or it may only partially fill the space between the inner and outer ducts

An aspect of the present invention provides a washing machine which prevents heat generated by a heater from being radiated from a drying duct, thereby reducing heat-loss.

The foregoing and/or other aspects of the present invention are achieved by providing a washing machine comprising a drum, a drying duct communicating with the drum, a fan which introduces air into the drying duct and a heater provided in the drying duct and which heats the air from the fan, wherein the drying duct is insulated so as to prevent heat generated by the heater from being radiated outward.

According to an embodiment of the present invention, the drying duct comprises an outer duct, an inner duct provided inside the outer duct, and on which the heater is disposed and a heat insulating part provided between the outer duct and the inner duct.

According to an embodiment of the present invention, the heat insulating part comprises an air layer provided between the outer duct and the inner duct.

According to another embodiment of the present invention, the heat insulating part comprises an insulator provided between the outer duct and the inner duct.

According to a further embodiment of the present invention, the inner duct comprises aluminum.

According to a still further embodiment of the present invention, the outer duct comprises plastics.

The present invention further provides a drying machine comprising a drum, a drying duct communicating with the drum, a fan which introduces air into the drying duct, and a heater provided in the drying duct and which heats the air from the fan, the drying duct being insulated so as to prevent heat generated by the heater from being radiated outward.

Preferred embodiments of the present invention will now be described, by way of example only, with reference to the accompanying drawings, in which:
Figure 1 is a cross sectional view of a drying duct of a conventional drum washing machine;
Figure 2 is a perspective view of a washing machine according to the present invention;
Figure 3 is a cross sectional side view of the washing machine of Figure 2;
Figure 4 is a cross sectional view of a first embodiment of a drying duct provided in a washing machine of the present invention; and
Figure 5 is a cross sectional view of a second embodiment of a drying duct provided in a washing machine of the present invention.

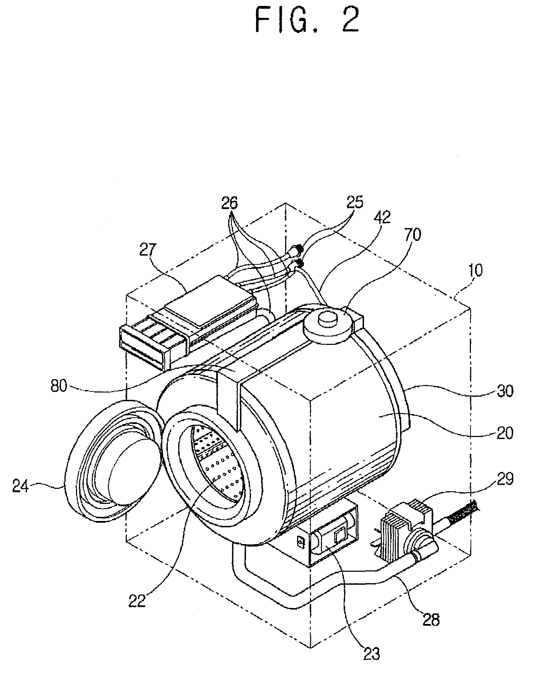

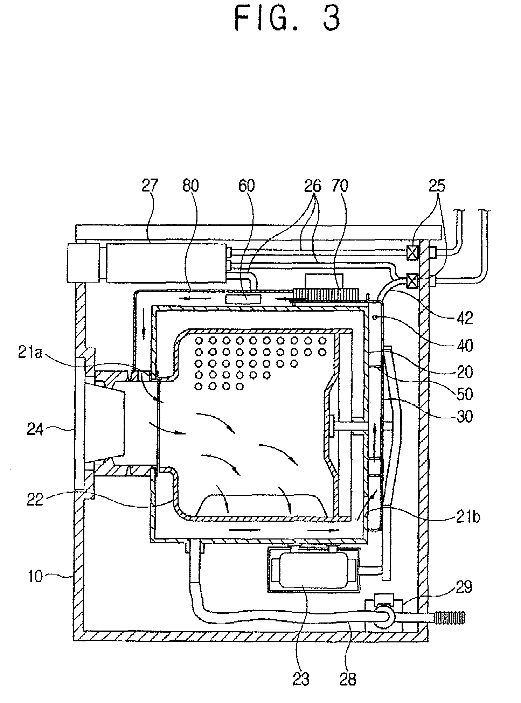

Referring now to Figures 2 and 3, a washing machine of the present invention is shown comprising a main body 10, a cylindrical drum 20 provided in the main body 10 and a cylindrical washing chamber 22 rotatably mounted in the drum 20 for containing laundry to be washed. The cylindrical washing chamber 22 has a plurality of drainage holes formed through a wall thereof and a driving motor 23 is provided in a lower portion of the drum 20 to rotate the washing chamber 22 clockwise or counterclockwise during washing, rinsing and/or draining operations. A door 24 is provided to open and close an opening in a front portion of the main body 10.

A water supply unit is provided in an upper portion of the drum 20 comprising a water supply valve 25, a water supply pipe 26 and a detergent dissolving unit 27 to supply water to the drum 20 and at the same time dissolve a laundry detergent, and a drying unit is provided to dry the clothes after the dewatering or draining process.

The drying unit comprises a fan 70 provided at an upper portion of the drum 20, a drying duct 80 communicating the fan 70 with an air inlet 21a of the drum 20 and a heater 60 provided inside the drying duct 80. A condensing duct 30 communicates an air outlet 21b of the drum 20 with the fan 70 and a coolant spray 40 is provided inside the condensing duct 30 for spraying coolant therethrough, and a coolant supply pipe 42 is connected to the coolant spray 40 for supplying coolant to the coolant spray 40.

In operation of the drying unit, air supplied by the fan 70 passes through the drying duct 80 and is heated by the heater 60. The heated air is supplied into the drum 20 through the air inlet 21b to dry the clothes. The high temperature and high humidity air which is generated during the drying process, then passes into the condensing duct 30 through the air outlet 21b of the drum 20 and the moisture in the high temperature and high humidity air in the condensing duct 30 is then condensed by the coolant sprayed from the coolant spray 40. The condensed moisture is then discharged from the washing and/or drying machine and the air is then reintroduced into the drying duct 80 through the condensing duct 30.

A condensing guide 50 is provided inside the condensing duct 30 to enhance condensation efficiency. The shape and an installation position of the condensing guide 50 may be variously changed as necessary.

A drain unit is provided in a lower portion of the drum 20 comprising a drain pipe 28 and a drain pump 29 to drain washing water from inside the drum 20.

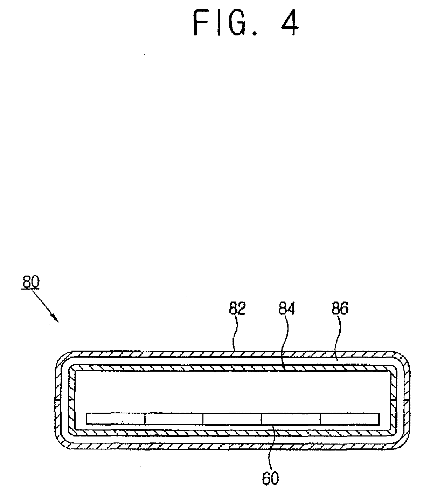

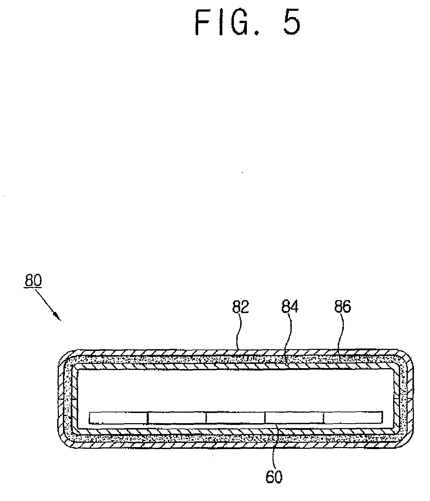

As shown in Figures 4 and 5, the drying duct 80 comprises an outer duct 82 and an inner duct 84 inside the outer duct 82 accommodating the heater 60. A heat insulating part 86 is provided between the outer duct 82 and the inner duct 84. The drying duct 80 is insulated to reduce heat-loss of the heat generated from the heater 60 and to minimize an increase of surface temperature of the duct 80 by the heater 60.

The outer duct 82 and the inner duct 84 may be respectively divided into an upper part and a lower part so as to be easily assembled and accommodate the heater 60. However, the configuration thereof may comprise a single body and may be variously changed as necessary.

The heat insulating part 86 may prevent the heat-loss of the heat generated by the heater 60 and may minimize the increase of the surface temperature of the outer duct 82. The heat insulating part 86 preferably, but not necessarily, entirely covers an inside of the outer duct 82. However, the heat insulating part 86 may alternatively partly cover the inside thereof.

The heat insulating part 86 may comprise an air layer in a space between the outer duct 82 and the inner duct 84 as shown in Figure 4 or comprise an insulator between the outer duct 82 and the inner duct 84 as shown in Figure 5, the material of the insulator being selected for optimum heat insulation properties. When the heat insulating part 86 comprises the air layer, the air layer is preferably, but not necessarily, trapped in an airtight space so as not to allow air to flow in or out of the airtight space.

The inner duct 84 may comprise, for example, aluminum with heat resistance or stainless steel, which may reflect the heat generated from the heater 60 back to the inside of the inner duct 84 to improve the heating efficiency. The inner duct 84 may comprise various materials so long as the material used is not adversely affected by the heat from the heater 60.

Because the heat insulating part 86 insulates the outer duct 82 from the heat, the surface temperature of the outer duct 82 is not increased so that the outer duct 82 may selectively comprise aluminum or plastics.

The present invention is described with regard to a washing machine having a "circulating" drying operation by way of an exemplary embodiment. However, all kinds of washing machines or drying machines comprising the drying duct having the heater, and of a "non-circulating" operation are within the scope of the invention.

Moreover, while the present invention describes a circulation drying operation washing machine as an exemplary embodiment, it is possible that similar devices such as a non-circulation drying operation washing machine or a drying machine comprising a condensing duct to have a built-in heater, are also within the scope of the invention. In such a case, a drum of a washing machine performs the same function as a drum of a drying machine to accommodate clothing, and other previously described elements are identically applicable. The configuration of such a drying machine is similar to that of the washing machine shown in Figures 2a-2b. Thus, a drawing of a drying machine is not shown in this specification.

Although exemplary embodiments of the present invention have been shown and described, it would be appreciated by those skilled in the art that changes may be made in these embodiments without departing from the principles of the invention, the scope of which is defined in the claims hereafter.

## Claims

1. A washing and/or drying machine comprising a drum, a drying duct in communication with the drum for the circulation of air therethrough and, a heater disposed in the drying duct to heat the air supplied to the drum, **characterised in that** the drying duct is insulated to minimise heat loss through the duct.

2. A washing and/or drying machine according to claim 1 wherein the drying duct comprises a plurality of layers.

3. A washing and/or drying machine according to claim 2 wherein the layers comprise an inner duct and an outer duct, the heater being disposed within said inner duct.

4. A washing and/or drying machine according to claim 3 wherein a space between the inner and outer duct is filled with air.

5. A washing and/or drying machine according to claim 4 wherein the air-filled space between the inner and outer duct is sealed.

6. A washing and/or drying machine according to claim 3 wherein a space between the inner and outer duct contains an insulating material.

7. A washing and/or drying machine according to claim 6 wherein the insulting material entirely fills the space between the inner and outer ducts.

8. A washing and/or drying machine according to claim 6 wherein the insulating material partially fills the space between the inner and outer ducts.

9. A washing machine comprising a drum, a drying duct communicating with the drum, a fan which introduces air into the drying duct and a heater provided in the drying duct and which heats the air from the fan, the drying duct being insulated so as to prevent heat generated by the heater from being radiated outward.

10. The washing machine according to claim 9 wherein the drying duct comprises an outer duct, an inner duct provided inside the outer duct, and on which the heater is disposed and a heat insulating part provided between the outer duct and the inner duct.

11. The washing machine according to claim 10 wherein the heat insulating part comprises an air layer provided between the outer duct and the inner duct.

12. The washing machine according to claim 10 wherein the heat insulating part comprises an insulator provided between the outer duct and the inner duct.

13. The washing machine according to claim 10 wherein the inner duct comprises aluminum.

14. The washing machine according to claim 11 wherein the inner duct comprises aluminum.

15. The washing machine according to claim 12 wherein the inner duct comprises aluminum.

16. The washing machine according to claim 13 wherein the outer duct comprises plastics.

17. The washing machine according to claim 14 wherein the outer duct comprises plastics.

18. The washing machine according to claim 15 wherein the outer duct comprises plastics.

19. The washing machine according to claim 10 wherein the inner duct comprises stainless steel.

20. The washing machine according to claim 10 wherein the outer duct comprises aluminum.

21. A drying machine comprising a drum, a drying duct communicating with the drum, a fan which introduces air into the drying duct and a heater provided in the drying duct and which heats the air from the fan, the drying duct being insulated so as to prevent heat generated by the eater from being radiated outward.

22. The drying machine according to claim 21 wherein the drying duct comprises an outer duct, an inner duct provided inside the outer duct, and on which the heater is disposed and a heat insulating part provided between the outer duct and the inner duct.
